# EUROPEAN PATENT APPLICATION

(11) **EP 4 621 858 A1**
(43) Date of publication of application: **24.09.2025**
(21) Application number: 23941428.7
(22) Date of filing: 28.12.2023
(51) Int. Cl.: H01M 4/04, H01M 4/139

(54) **NEGATIVE ELECTRODE SHEET AND PROCESSING METHOD THEREFOR, AND BATTERY AND ELECTRIC DEVICE**

(30) Priority: 16.06.2023 CN 202310720761
(71) Applicant: Contemporary Amperex Technology Co., Limited, Ningde, Fujian 352100 (CN)
(72) Inventor: XING, Qi, Ningde, Fujian 352100 (CN); SUN, Chengdong, Ningde, Fujian 352100 (CN); LIU, Huihui, Ningde, Fujian 352100 (CN); ZHANG, Xinhui, Ningde, Fujian 352100 (CN); ZHANG, Zhenxu, Ningde, Fujian 352100 (CN)
(74) Representative: Behr, Wolfgang
(86) International application number: PCT/CN2023/142937
(87) International publication number: WO 2024/255208

(57) **Abstract**

Disclosed are a negative electrode plate and a processing method therefor, a battery, and an electrical apparatus. The processing method for a negative electrode plate includes: performing combusting treatment on a specified part of the negative electrode plate, where the specified part at least includes an edge of the negative electrode plate, and the combusting treatment includes combusting a fuel gas and heating the specified part using generated flames. **In** the processing method for a negative electrode plate, the edge of the negative electrode plate is subjected to combusting treatment to ablate burrs by the flames, which facilitates ameliorating the burr problem of the negative electrode plate at the edge.

## Description

### CROSS-REFERENCE TO RELATED APPLICATIONS

The present application claims priority to Chinese Patent Application No. 202310720761.3, entitled "NEGATIVE ELECTRODE PLATE AND PROCESSING METHOD THEREOF, BATTERY AND ELECTRICAL APPARATUS" and filed on June 16, 2023, which is incorporated herein by reference in its entirety.

### TECHNICAL FIELD

The present application relates to the field of battery technologies, and specifically to a negative electrode plate and a processing method therefor, a battery, and an electrical apparatus.

### BACKGROUND

When a negative electrode plate is slit, burrs easily occur at the edge, and the burrs easily result in poor self-discharging of a battery.

### SUMMARY

In view of the foregoing problem, the present application provides a negative electrode plate and a processing method therefor, a battery, and an electrical apparatus, facilitating ameliorating the burr problem of the negative electrode plate at the edge.

The embodiments of the present application are implemented as follows:
In a first aspect, an embodiment of the present application provides a processing method for a negative electrode plate, including: performing combusting treatment on a specified part of the negative electrode plate, wherein the specified part at least includes an edge of the negative electrode plate, and the combusting treatment includes combusting a fuel gas and processing the specified part using generated flames.

In the processing method for a negative electrode plate provided in the embodiment of the present application, the edge of the negative electrode plate is subjected to combusting treatment to ablate the burrs by the flames, which facilitates ameliorating the burr problem of the negative electrode plate at the edge. In addition, through the combusting treatment by combusting a fuel gas, a gas flow generated by the fuel gas can blow away the burr ablation product, facilitating the fuller burr ablation by the flames on the edge of the negative electrode plate, and also maintaining relatively good cleanliness of the surface of the negative electrode plate.

In some embodiments, during the combusting treatment, the fuel gas is injected toward the negative electrode plate in a specified direction for combustion, and an angle between the specified direction and a thickness direction of the negative electrode plate is 0° to 60°.

In these embodiments, the fuel gas is injected at a suitable specified angle toward the negative electrode plate for combustion, which facilitates stabilizing the flames, such that the flames can better perform the combusting treatment on the negative electrode plate, and in addition, it is beneficial for the airflow to quickly blow away the ablation products, facilitating the significant reduction of the burr defect rate at the edge of the negative electrode plate.

In some embodiments, an angle between the specified direction and the thickness direction of the negative electrode plate is 0° to 30°.

In these embodiments, the fuel gas is injected at a further specified angle toward the negative electrode plate for combustion, which more facilitates stabilizing the flames, such that the flames can better perform the combusting treatment on the negative electrode plate, and in addition, it is more beneficial for the airflow to quickly blow away the ablation products, facilitating the reduction of the burr defect rate at the edge of the negative electrode plate.

In some embodiments, in the combusting treatment, the fuel gas is injected toward the negative electrode plate at a specified distance from the negative electrode plate for combustion, wherein the specified distance is 3 cm to 15 cm.

In these embodiments, the fuel gas is injected at a suitable specified distance toward the negative electrode plate for combustion, which facilitates controlling the temperature of the flames on the negative electrode plate, such that the flames can better perform the combusting treatment on the negative electrode plate, facilitating the significant reduction of the burr defect rate at the edge of the negative electrode plate.

In some embodiments, the specified distance is 5 cm to 15 cm.

In these embodiments, the fuel gas is injected at a further specified distance toward the negative electrode plate for combustion, which facilitates the more suitable control of the temperature of the flames on the negative electrode plate, such that the flames can better perform the combusting treatment on the negative electrode plate, facilitating the reduction of the burr defect rate at the edge of the negative electrode plate.

In some embodiments, in the combusting treatment, the negative electrode plate is passed through the flames at a specified speed, and the specified speed is 50 m/min to 150 m/min.

In these embodiments, passing the negative electrode plate through the flames at a suitable specified speed facilitating controlling the surfaces of the negative electrode plates to reach a suitable temperature, such that the flames can better perform the combusting treatment on the negative electrode plate, facilitating the significant reduction of the burr defect rate at the edge of the negative electrode plate.

In some embodiments, the specified speed is 50 m/min to 80 m/min.

In these embodiments, passing the negative electrode plate through the flames at a further specified speed facilitating controlling the surfaces of the negative electrode plates to reach a suitable temperature, such that the flames can better perform the combusting treatment on the negative electrode plate, facilitating the reduction of the burr defect rate at the edge of the negative electrode plate.

In some embodiments, in the combusting treatment, the air-fuel ratio is (5 to 14) : 1.

In these embodiments, satisfying a suitable air-fuel ratio in the combusting treatment facilitates the complete combustion of the fuel gas and the stability of the temperature of the flames, which can perform a better combusting treatment on the negative electrode plate, facilitating desirably reducing the burr defect rate at the edge of the negative electrode plate.

In some embodiments, the air-fuel ratio is (5 to 8) : 1.

In these embodiments, satisfying a further air-fuel ratio in the combusting treatment facilitates the complete combustion of the fuel gas and moreover better maintaining the stability of the temperature of the flames, which can perform a better combusting treatment on the negative electrode plate and better blows away the burr ablation products, facilitating desirably reducing the burr defect rate at the edge of the negative electrode plate.

In some embodiments, the flame has a temperature of 900°C to 1300°C.

In these embodiments, the flame satisfies a particular temperature, facilitating the better ablation of the burrs of the negative electrode current collector and the negative electrode active material layer at the edges.

In some embodiments, the specified part includes a specified surface of the negative electrode plate, and the specified surface of the negative electrode plate is a surface of the negative electrode plate distributed in the thickness direction.

In these embodiments, the specified part includes a surface of the negative electrode plate distributed in the thickness direction, such that the combusting treatment can achieve surface modification on the entire surface of the negative electrode plate.

In some embodiments, the fuel gas includes one or more of methane, propane, butane, pentane, pentene or acetylene.

In these embodiments, the fuel gas includes a gas source of a particular type, such that it is convenient to control the flames to reach a suitable temperature, facilitating the better ablation of the burrs of the negative electrode current collector and the negative electrode active material layer at the edges. In addition, the flames generated by the combustion of the fuel gas have a large amount of strong oxidizing gases, which is subjected to an oxidization reaction with the surface of the negative electrode plate at a high temperature to introduce charged polar functional groups, facilitating the increase of the surface energy of the negative electrode plate.

In a second aspect, an embodiment of the present application provides a negative electrode plate, obtained through the processing method for a negative electrode plate according to the above embodiments.

In a third aspect, an embodiment of the present application provides a battery, including the negative electrode plate of the above embodiments.

In a fourth aspect, an embodiment of the present application provides an electrical apparatus, including the battery of the above embodiments.

The above description only refers to an overview of the technical solution of the embodiments in the present application. In order to understand the technical means of the present application more clearly, it can be implemented according to the content of the description. In order to make the above-mentioned and other purposes, features and advantages of the present application more apparent, the specific implementations of the present application are listed below.

### BRIEF DESCRIPTION OF THE DRAWINGS

In order to more clearly explain the technical solutions of the embodiments of the present application, the drawings being used in the embodiments will be described briefly below. It should be understood that the following drawings illustrate only some embodiments of the present application and are therefore not to be considered as a limitation on the scope thereof. For those of ordinary skill in the art, other relevant drawings can also be obtained from these drawings without any creative effort.
FIG. 1 shows a schematic structural diagram of a vehicle provided in some embodiments of the present application;
FIG. 2 shows an exploded view of a battery provided in some embodiments of the present application;
FIG. 3 shows an exploded view of a battery cell provided in some embodiments of the present application;
FIG. 4 shows a schematic structural diagram of an electrode assembly provided in some embodiments of the present application;
FIG. 5 shows a processing flowchart of a processing method for a negative electrode plate provided in some embodiments of the present application;
FIG. 6 shows a schematic structural diagram of a negative electrode plate provided in some embodiments of the present application;
FIG. 7 shows a schematic diagram of a side view of a processing method for a negative electrode plate provided in some embodiments of the present application;
FIG. 8 shows a schematic diagram of a top view of a processing method for a negative electrode plate provided in some embodiments of the present application;
FIG. 9 shows topographical photographs of edges of negative electrode plates provided in some embodiments and comparative examples of the present application; and
FIG. 10 shows photographs for test results of surface energy of the negative electrode plates provided in some embodiments and comparative examples of the present application.

### List of reference signs:

1000-vehicle;
100-battery; 200-controller; 300-motor;
10-box; 11-first portion; 12-second portion; 13-receiving space;
20-battery cell; 21-shell; 22-electrode assembly; 23-electrode terminal; 24-pressure relief structure;
211-case; 212-cover; 213-sealed space;
221-positive electrode plate; 222-negative electrode plate; 223-separator;
2221-edge of the negative electrode plate; 2222-specified surface of the negative electrode plate;

A-specified direction; B-thickness direction of the negative electrode plate; C-passing direction of the negative electrode plate; D-gas delivery lighting device; and L-specified distance.

### DETAILED DESCRIPTION

To make the objectives, technical solutions, and advantages of the embodiments of the present application clearer, the technical solutions in the embodiments of the present application will be clearly and completely described below. If specific conditions are not indicated in the embodiments, it shall be carried out in accordance with the conventional conditions or the conditions recommended by the manufacturer. Where no manufacturer is indicated for the reagents or instruments used, they are conventional products that can be commercially obtained.

The embodiments of the technical solutions of the present application will be described in detail below with reference to the accompanying drawings. The following embodiments are only used to illustrate the technical solutions of the present application more explicitly, and are thus only interpreted as examples, rather than used to limit the protection scope of the present application.

Unless otherwise defined, all technical and scientific terms used herein have the same meaning as commonly understood by those skilled in the technical field to which the present application belongs. The terminology used herein is for the purpose of describing particular embodiments only and is not intended to limit the present application. The terms "comprising" and "having" and any variations thereof in the description and claims of the present application and the above description of the accompanying drawings are intended to cover non-exclusive inclusions.

In the description according to the embodiments of the present application, the technical terms "first", "second", and the like are only used to distinguish different objects, and should not be understood as indicating or implying relative importance or implying the number, specific order or primary and secondary relationship of indicated technical features.

In the descriptions of the embodiments of the present application, technical terms "and/or", such as "feature 1 and/or feature 2", both refer to "feature 1" alone, "feature 2" alone, and "feature 1" plus "feature 2". In addition, the character "/" in this specification generally indicates an "or" relationship between the associated objects.

In the description of the present application, unless otherwise stated, the meaning of "more" in "one or more" refers to two or more.

The phrase "embodiment" mentioned herein means that the specific features, structures, or characteristics described in conjunction with the embodiment can be encompassed in at least one embodiment of the present application. The appearances of the phrase in various places in the specification are not necessarily all referring to the same embodiment, nor an independent or alternative embodiment that is mutually exclusive of other embodiments. A person skilled in the art explicitly or implicitly understands that the embodiments described in the specification may be combined with other embodiments.

In the embodiments of the present application, the same reference numerals denote the same components, and for the sake of brevity, the detailed description of the same components is omitted in different embodiments. It should be understood that the dimensions, such as height, length and width, of the various components in the embodiments of the present application illustrated in the drawings, as well as the dimensions, such as an overall height, length and width, of an integrated apparatus are merely illustrative and should not be construed as any limitation on the present application.

Nowadays, from the perspective of development of the market situation, the power batteries are applied increasingly. The power batteries are not only used in energy storage power systems such as water power plant, fire power plant, wind power plant and solar power plant, but also in electric transportations such as electric bicycles, electric motorcycles, electric vehicles, as well as in military equipment, aerospace and other fields. With continuous expansion of application fields of traction batteries, market demands for traction batteries are also expanding.

With the continuous development of new energy industry, market demands for battery electrode plates are becoming more diverse. In some current technical solutions, research on an electrode plate mainly focuses on modifying a material, adjusting an internal microstructure, surface processing, and the like on the electrode plate.

However, in a production process of an electrode plate, an active material layer is usually first formed on a surface of a current collector, followed by slitting, and during the slitting of a negative electrode plate, burrs easily occur at an edge, and the existence of the burrs easily results in poor self-discharging of a battery, thereby possibly causing a safety accident.

In some current technical solutions, to reduce the impact of the edge burrs, a separator is usually improved, for example, the separator 223 is thicken at a position corresponding to an edge portion of an electrode plate or the number of layers of the separator is increased. However, such operation increases the material costs of the separator, time costs and material costs of producing an assembled battery, and still cannot fundamentally solve the problem of the burrs.

Based on this, an embodiment of the present application provides a negative electrode plate and a processing method therefor, where the edge of the negative electrode plate is subjected to combusting treatment to ablate the burrs by the flames, which facilitates ameliorating the burr problem of the negative electrode plate at the edge. The processing method can fundamentally ameliorate a risk of burrs, and moreover has a simple operation and relatively low costs.

The battery cell to which the negative electrode plate is applied disclosed in this embodiment of the present application may be used in, but is not limited to, an electrical device such as a vehicle, a ship, or an aircraft. An embodiment of the present application provides an electrical device using a battery as a power supply. The electrical device may be, but is not limited to, a mobile phone, a tablet computer, a laptop, an electric toy, an electric tool, a battery cart, an electric vehicle, a ship, a spacecraft, etc. Herein, the electric toy may include a stationary or mobile electric toy, for example, a game console, an electric vehicle toy, an electric ship toy, and an electric airplane toy. The spacecraft may include an airplane, a rocket, a space shuttle, a spacecraft, and the like.

For ease of description, the following embodiment is described by using an example in which the electrical apparatus of this embodiment of the present application is a vehicle.

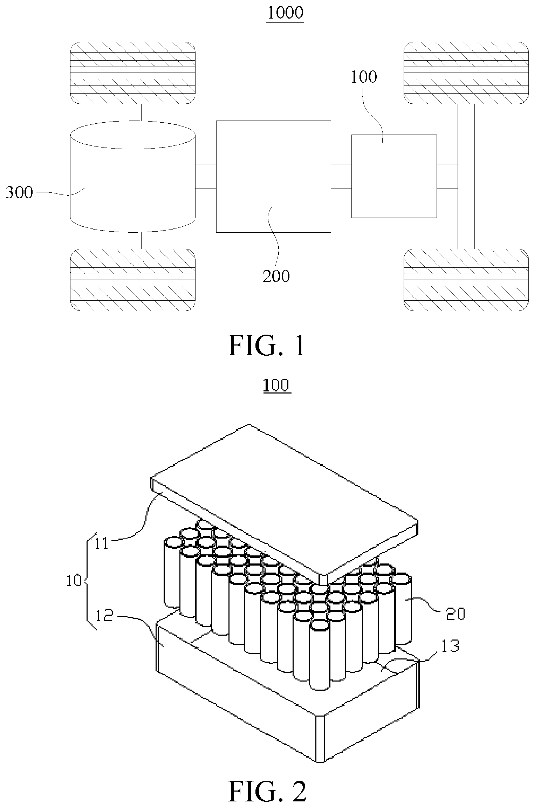

Referring to FIG. 1, FIG. 1 shows a schematic structural diagram of a vehicle 1000 according to some embodiments of the present application. A vehicle 1000 may be a fuel powered vehicle, a gas powered vehicle, or a new energy vehicle. The new energy vehicle may be a pure electric vehicle, a hybrid electric vehicle, or an extended range vehicle, etc. The inner part of the vehicle 1000 is provided with a battery 100. The battery 100 may be arranged at the bottom, head, or tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of the present application, the battery 100 can not only serve as a power supply for operating the vehicle 1000, but can also serve as a power supply for driving the vehicle 1000, in place of or partially in place of fuel or natural gas, to provide driving power for the vehicle 1000.

In the present application, the battery 100 is a single physical module including one or more battery cells 20 to provide a higher voltage and a higher capacity, which can be a battery pack, a battery module, etc. The battery 100 may include a box 10 for packaging one or more battery cells 20, and the box 10 can prevent liquid or other foreign matters from affecting the charging or discharging of the battery cells 20.

Referring to FIG. 2, FIG. 2 shows an exploded view of a battery 100 according to some embodiments of the present application. The battery 100 includes a box 10 and battery cells 20. The battery cells 20 are accommodated in the box 10. Herein, the box 10 is configured to provide to receive the battery cells 20. The box 10 may be of various structures. In some embodiments, the box 10 may include a first portion 11 and a second portion 12. The first portion 11 and the second portion 12 cover each other, and the first portion 11 and the second portion 12 together define a receiving space 13 for receiving the battery cells 20. The second portion 12 may be of a hollow structure with one end being open, the first portion 11 may be of a plate-like structure, and the first portion 11 covers the open side of the second portion 12, to form a box 10 having a receiving space 13. The first portion 11 and the second portion 12 each may be of a hollow structure with one side being open, and the open side of the first portion 11 covers the open side of the second portion 12 to form a box 10 having a receiving space 13. Certainly, the first portion 11 and the second portion 12 may be in various shapes, such as a cylinder and a cuboid.

In the battery 100, a plurality of battery cells 20 may be connected in series, in parallel or in series-parallel. The series-parallel connection means that some of the plurality of battery cells 20 are connected in series and some are connected in parallel. The plurality of battery cells 20 may be directly connected in series, parallel, or series-parallel together, and then the whole formed by the plurality of battery cells 20 may be accommodated in the box 10. The plurality of battery cells 20 are first connected in series, parallel, or series-parallel to form a battery module and a plurality of battery modules are then connected in series, parallel, or series-parallel to form a whole and accommodated in the box 10. The battery 100 may further include another structure. For example, the plurality of battery cells 20 may be electrically connected to each other by means of a busbar component, to implement series connection, parallel connection, or series-parallel connection of the plurality of battery cells 20.

A battery cell 20 is the smallest unit forming a battery pack. The battery cell 20 is a lithium-sulfur battery, a sodium-ion battery, or a magnesium-ion battery, but is not limited thereto.

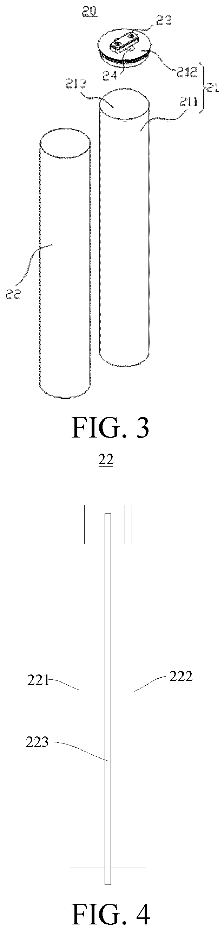

Referring to FIG. 3, the battery cell 20 may include a shell 21, an electrode assembly 22, and an electrolyte. The electrode assembly 22 and the electrolyte are both contained in the shell 21.

The shell 21 may include a case 211 and a cover 212. The case 211 is an assembly configured to form, with the cover 212, an internal sealed space 213 for the battery cells 20, where the formed internal sealed space 213 may be configured to receive the electrode assembly 22, an electrolyte, and other components. The cover 212 refers to a component that covers an opening of the case 211 to isolate the internal environment for the battery cell 20 from an external environment. The shape of the cover 212 may be adapted to the shape of the case 211 to fit the case 211. Functional components such as an electrode terminal 23 and a pressure relief structure 24 may be further provided on the cover 212. A sealing ring may be configured between the opening of the case 211 and the cover 212, to achieve the sealing between the case 211 and the cover 212.

The case 211 and cover 212 may be of various shapes and sizes, such as in a cuboid shape, a cylindrical shape, and a hexagonal prism shape. Specifically, the shape of the case 211 and cover 212 may be determined based on the specific shape and size of an electrode assembly 22. The case 211 and cover 212 may be made of various materials, such as but not limiting to, a metal of copper, iron, aluminum, stainless steel, an aluminum alloy, etc. The sealing ring may be made of various materials, such as but not limiting to, a material that is resistant to electrolyte corrosion, has high toughness, and is resistant to fatigue, such as PP (polypropylene), PC (polycarbonate), or PET (polyethylene terephthalate). A coating may be formed on the outer surface of the case 211. The coating may be made of various materials, such as but not limiting to, a corrosion-resistant material such as Ni or Cr.

The battery cell 20 may be in a form of a soft pack, for example, a pouch-type soft pack. The material of the soft package may be a plastic, and the examples of plastic may include polypropylene, polybutylene terephthalate, polybutylene succinate, and the like.

Referring to FIG. 4, the electrode assembly 22 includes a negative electrode plate 222, a separator 223 and a positive electrode plate 221. The battery cell 20 works mainly by the movement of metal ions between the positive electrode plate 221 and the negative electrode plate 222. During the charging and discharging, active ions are intercalated and de-intercalated back and forth between the positive electrode plate 221 and the negative electrode plate 222, and the separator 223 is arranged between the positive electrode plate 221 and the negative electrode plate 222, mainly prevents positive and negative electrodes from short-circuiting and enables the passage of ions. In addition, the electrode assembly 22 may be either of a winding type structure or a stacked structure, which is not limited in the embodiments of the present application.

The positive electrode plate 221 includes a positive electrode current collector and a positive electrode active material layer, the positive electrode active material layer is provided on at least one side of the positive electrode current and a primer coating layer and the like may be further provided between the positive electrode active material layer and the positive electrode current collector.

Herein, the positive electrode current collector may be a metal foil or a composite current collector, for example, the positive electrode current collector may be made of a material of aluminum. The composite current collector may include one that comprises a polymer material base layer and a metal layer formed on at least one side of the polymer material base layer, which can be prepared by forming a metal material (aluminum, aluminum alloys, nickel, nickel alloys, titanium, titanium alloys, silver and silver alloys, etc.) on a polymer material substrate (such as polypropylene (PP), polyethylene terephthalate (PET), polybutylene terephthalate (PBT), polystyrene (PS), polyethylene (PE), etc.).

For example, the positive electrode active material in the positive electrode active material layer may include at least one of the following materials: lithium-containing phosphates of an olivine structure, lithium transition metal oxides, and respective modified compounds thereof. However, the present application is not limited to these materials, and other conventional materials useful as negative electrode active materials for positive electrode active materials can also be used. These positive electrode active materials may be used alone or in combination of two or more. Herein, examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, and LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), and LiNi_{0.8}Co_{0.1}Mn_{0.1}O₂ (also referred to as NCM₈₁₁)), lithium nickel cobalt aluminum oxide (e.g., LiNi_{0.85}Co_{0.15}Al_{0.05}O₂), and modified compounds thereof, etc. Examples of lithium-containing phosphates of olivine structure may include, but are not limited to, at least one of lithium iron phosphate (e.g., LiFePO₄), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode active material layer also optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylic resin.

In some embodiments, the positive electrode film layer optionally includes a conductive agent. As an example, the conductive agent may include at least one of superconducting carbon, acetylene black, carbon black, Ketjen black, carbon dots, carbon nanotubes, graphene, and carbon nanofibers.

The negative electrode plate 222 includes a negative electrode current collector and a negative electrode active material layer. The negative electrode active material layer is provided on at least one side of the negative electrode current collector. A primer coating and the like may be further provided between the negative electrode current collector and the negative electrode active material layer.

Herein, the negative electrode current collector may be a metal foil or a composite current collector. For example, the negative electrode current collector may be made of a material of copper. The composite current collector may include one that comprises a polymer material base layer and a metal layer formed on at least one side of the polymer material substrate, and the composite current collector can be formed by forming a metal material (copper, copper alloys, nickel, nickel alloys, titanium, titanium alloys, silver and silver alloys, etc.) on a polymer material substrate (such as polypropylene (PP), polyethylene terephthalate (PET), polybutylene terephthalate (PBT), polystyrene (PS), polyethylene (PE), etc.).

The negative electrode active material in the negative electrode active material layer may be a negative electrode active material such as carbon or silicon. As an example, the negative electrode active material may include at least one of the following materials: artificial graphite, natural graphite, soft carbon, hard carbon, a silicon-based material, a tin-based material, lithium titanate, etc. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, the present application is not limited to such materials, and other conventional materials that can be used as negative electrode active material substances can also be used.

In some embodiments, the negative electrode active material layer also optionally includes a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode active material layer optionally includes another adjuvant such as a thickener (for example, sodium carboxymethyl cellulose (CMC-Na)).

The separator 223 is provided between the positive electrode plate 221 and the negative electrode plate 222 and functions for isolation. The type of the separator 223 is not particularly limited in the embodiments of the present application, and any well-known separator 223 with a porous structure having good chemical stability and mechanical stability may be selected.

In some embodiments, the material of the separator 223 may be at least one selected from glass fibers, non-woven fabric, polyethylene, polypropylene, or polyvinylidene fluoride. The separator 223 may be either a single-layer film or a multilayer composite film, which is not limited particularly. When the separator 223 is a multi-layer composite film, the materials in the respective layers may be same or different, which is not limited particularly.

Next, the negative electrode plate 222 and a processing method therefor provided in the embodiments of the present application are described in detail.

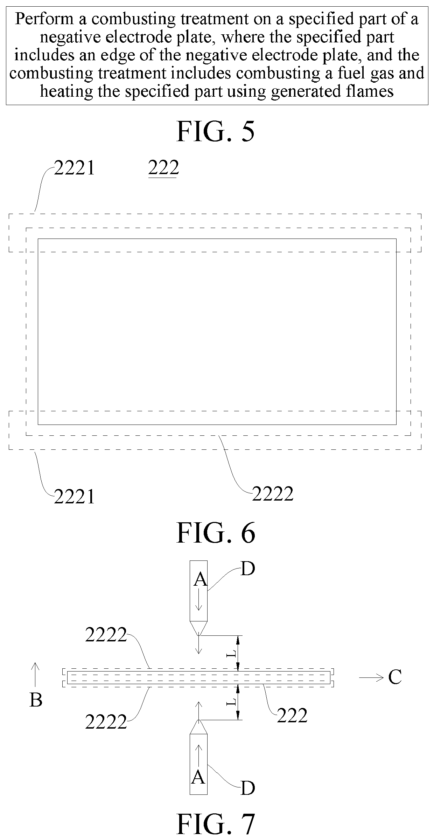

Referring to FIG. 5, in a first aspect, an embodiment of the present application provides a processing method for a negative electrode plate, including: performing combusting treatment on a specified part of a negative electrode plate 222, where, referring to FIG. 6, the specified part at least includes an edge 2221 of the negative electrode plate, and the combusting treatment includes combusting a fuel gas and heating the specified part using generated flames.

The specified part includes at least the edge 2221 of the negative electrode plate, which means that the specified part is not limited to only the edge 2221 of the negative electrode plate, and may further include a non-edge part of the negative electrode plate 222.

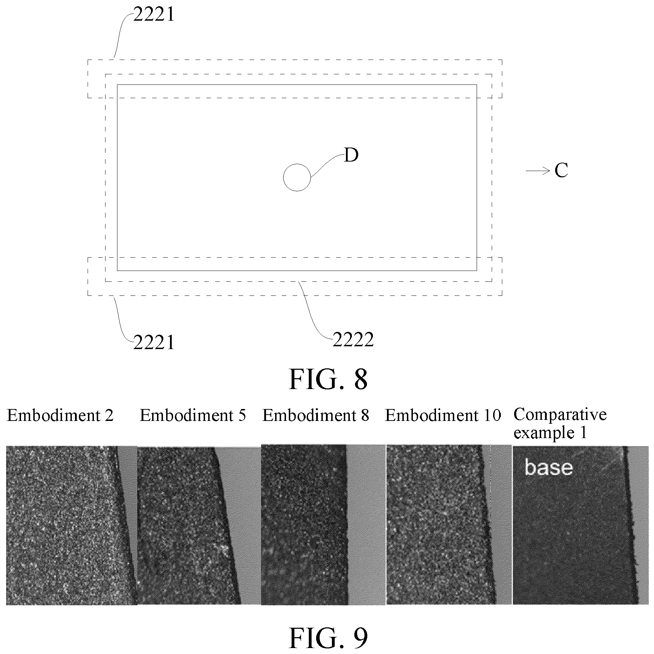

The edge 2221 of the negative electrode plate may include an edge of the negative electrode active material layer and/or an edge of the negative electrode current collector, and the edge 2221 of the negative electrode plate may be located at an edge of the specified surface 2222 of the negative electrode plate and/or located in a side of the negative electrode plate 222. Herein, referring to FIG. 7 and FIG. 8, the specified surface 2222 of the negative electrode plate refers to a surface of the negative electrode plate 222 distributed in the thickness direction. In other words, the specified surface 2222 of the negative electrode plate is substantially perpendicular to the thickness direction B of the negative electrode plate. A side of the negative electrode plate 222 refers to a surface that is substantially parallel to the thickness direction B of the negative electrode plate.

As an example, the negative electrode plate 222 is a die cut strip, including a first edge relatively distributed along the first direction and a second edge relatively distributed along the second direction. The first edge is a die cut edge of the die cut strip. The first edge may be an edge on which a negative electrode tab is die cut or an edge on which a negative electrode tab has not been die cut. The specified part includes at least one of the first edges. Exemplarily, the first direction and the second direction are two directions that are perpendicular to each other.

The fuel gas includes a combustible gas, and is, for example, passed, by using a gas delivery lighting device D such as a lance or a burner tip, to a specified location of the combusting treatment for combustion. In a process of delivering the fuel gas, optionally, an auxiliary fuel gas may be delivered together with the fuel gas or separately from the fuel gas.

In a process of processing the specified part by using the generated flames, the flames heat the specified part, such that the specified part is burned by the flame.

In the processing method for a negative electrode plate provided in the embodiment of the present application, the edge 2221 of the negative electrode plate is subjected to combusting treatment to ablate the burrs by the flames, which facilitates ameliorating the burr problem of the negative electrode plate 222 at the edge. In addition, through the combusting treatment by combusting a fuel gas, a gas flow generated by the fuel gas can blow away the burr ablation product, facilitating the more full burr ablation by the flames on the edge 2221 of the negative electrode plate, and also maintaining relatively good cleanliness of the surface of the negative electrode plate 222.

Referring to FIG. 7, in some embodiments, during the combusting treatment, the fuel gas is injected toward the negative electrode plate 222 in a specified direction A for combustion, and an angle between the specified direction A and the thickness direction B of the negative electrode plate is 0° to 60°.

As an example, the angle between the specified direction A and the thickness direction B of the negative electrode plate is, for example, but is not limited to, any one of 0°, 5°, 10°, 15°, 20°, 25°, 30°, 35°, 40°, 45°, 50°, 55°, or 60° or a range value between any two of them.

When the angle between the specified direction A and the thickness direction B of the negative electrode plate is 0°, the specified direction A is substantially perpendicular to the specified surface 2222 of the negative electrode plate; when the angle between the specified direction A and the thickness direction B of the negative electrode plate is 90°, the specified direction A is substantially parallel to the specified surface 2222 of the negative electrode plate.

Referring to FIG. 7, the specified direction A refers to a direction in which the fuel gas is injected out from the burner port, and the specified direction A is basically the same as an axial direction of the combustion port.

In these embodiments, the fuel gas is injected at a suitable specified angle toward the negative electrode plate 222 for combustion, which facilitates stabilizing the flames, such that the flames can better perform the combusting treatment on the negative electrode plate 222, and in addition, it is beneficial for the airflow to quickly blow away the ablation products, facilitating the significant reduction of the burr defect rate at the edge 2221 of the negative electrode plate.

In some embodiments, an angle between the specified direction A and the thickness direction B of the negative electrode plate is 0° to 30°.

In these embodiments, the fuel gas is injected at a further specified angle toward the negative electrode plate 222 for combustion, which more facilitates stabilizing the flames, such that the flames can better perform the combusting treatment on the negative electrode plate 222, and in addition, it is more beneficial for the airflow to quickly blow away the ablation products, facilitating the reduction of the burr defect rate at the edge 2221 of the negative electrode plate.

Referring to FIG. 7, in some embodiments, in the combusting treatment, the fuel gas is injected toward the negative electrode plate 222 at a specified distance L from the negative electrode plate 222 for combustion, wherein the specified distance L is 3 cm to 15 cm.

As an example, the specified distance L is, for example, but is not limited to, a point value of any one of 3 cm, 4 cm, 5 cm, 6 cm, 7 cm, 8 cm, 9 cm, 10 cm, 11 cm, 12 cm, 13 cm, 14 cm, or 15 cm, or a range value between any two of them.

Referring to FIG. 7, the specified distance L refers to a vertical distance from a burner port of the fuel gas to the specified surface 2222 of the negative electrode plate, that is, a distance from the burner port of the fuel gas to the specified surface 2222 of the negative electrode plate along the thickness direction B of the negative electrode plate.

In these embodiments, the fuel gas is injected at a suitable specified distance L toward the negative electrode plate 222 for combustion, which facilitates controlling the temperature of the flames on the negative electrode plate 222, such that the flames can better perform the combusting treatment on the negative electrode plate 222, facilitating the significant reduction of the burr defect rate at the edge 2221 of the negative electrode plate.

In some embodiments, the specified distance L is 5 cm to 15 cm.

In these embodiments, the fuel gas is injected at a further specified distance L toward the negative electrode plate 222 for combustion, which facilitates the more suitable control of the temperature of the flames on the negative electrode plate 222, such that the flames can better perform the combusting treatment on the negative electrode plate 222, facilitating the reduction of the burr defect rate at the edge 2221 of the negative electrode plate.

Referring to FIG. 7 and FIG. 8, in some embodiments, in the combusting treatment, the negative electrode plate 222 passes the flames at a specified speed, and the specified speed is 50 m/min to 150 m/min.

As an example, the specified speed is, for example, but is not limited to, a point value of any one of 50 m/min, 60 m/min, 70 m/min, 80 m/min, 90 m/min, 100 m/min, 110 m/min, 120 m/min, 130 m/min, 140 m/min, or 150 m/min or a range value between any two of them.

In an embodiment of the present application, optionally, the gas delivery lighting device D that injects the ignition fuel gas is kept at a fixed position, and the negative electrode plate 222 is delivered relative to the gas delivery lighting device D by means of a belt or a roll at a specified speed, such that the negative electrode plate 222 passes through the flames at a specified speed.

Referring to FIG. 7 and FIG. 8, as an example, the specified surface 2222 of the negative electrode plate is placed flat on the transportation surface for transportation, that is, the passing direction C of the negative electrode plate is substantially perpendicular to the thickness direction B of the negative electrode plate.

In these embodiments, passing the negative electrode plate 222 through the flames at a suitable specified speed facilitating controlling the surface of the negative electrode plate 222 to reach a suitable temperature, such that the flames can better perform the combusting treatment on the negative electrode plate 222, facilitating the significant reduction of the burr defect rate at the edge 2221 of the negative electrode plate.

In some embodiments, the specified speed is 50 m/min to 80 m/min.

In these embodiments, passing the negative electrode plate 222 through the flames at a further specified speed facilitating controlling the surface of the negative electrode plate 222 to reach a suitable temperature, such that the flames can better perform the combusting treatment on the negative electrode plate 222, facilitating the reduction of the burr defect rate at the edge 2221 of the negative electrode plate.

In some embodiments, in the combusting treatment, the air-fuel ratio is (5 to 14) : 1.

As an example, the air-fuel ratio is, for example, but is not limited to, a point value of any one of 5 : 1, 6 : 1, 7 : 1, 8 : 1, 9 : 1, 10 : 1, 11 : 1, 12 : 1, 13 : 1, or 14 : 1, or a range value of any two of them.

The air-fuel ratio refers to a mass ratio of air to fuel gas, and may be regulated by designing the flow rates of the fuel gas and the air to match a desired ratio. As an example, the fuel gas and the air are mixed at a specific flow rate according to a requirement of the air-fuel ratio, and then the mixed gas is introduced for combustion. In addition, the air-fuel ratio may be calculated according to the flow rates, which are fed back by the flow meters for the fuel gas and the air.

In these embodiments, satisfying a suitable air-fuel ratio in the combusting treatment facilitates the complete combustion of the fuel gas and the stability of the temperature of the flames, which can perform a better combusting treatment on the negative electrode plate 222, facilitating desirably reducing the burr defect rate at the edge 2221 of the negative electrode plate.

In some embodiments, the air-fuel ratio is (5 to 8) : 1.

In these embodiments, satisfying a further air-fuel ratio in the combusting treatment facilitates the complete combustion of the fuel gas and moreover better maintaining the stability of the temperature of the flames, which can perform a better combusting treatment on the negative electrode plate 222 and better blows away the burr ablation products, facilitating desirably reducing the burr defect rate at the edge 2221 of the negative electrode plate.

In some embodiments, the flame has a temperature of 900°C to 1300°C.

As an example, the temperature of the flames may be, but is not limited to, a point value of 900°C, 1000°C, 1100°C, 1200°C, or 1300°C, or a range value between any two of them.

The temperature of the flames may be adjusted by adjusting the type of the fuel gas, the air-fuel ratio, and the like.

The temperature of the flames is, for example, an external flame temperature. For example, the temperature of the external flame of the flame can be measured.

In these embodiments, the flame satisfies a particular temperature, facilitating the better ablation of the burrs of the negative electrode current collector and the negative electrode active material layer at the edges.

In some embodiments, the specified part includes a specified surface 2222 of the negative electrode plate, and the specified surface 2222 of the negative electrode plate is a surface of the negative electrode plate 222 distributed in the thickness direction.

The specified part includes the specified surface 2222 of the negative electrode plate. That is, the combusting treatment not only processes the edge 2221 of the negative electrode plate, but also processes a part other than the edge in the specified surface 2222 of the negative electrode plate. That is, the entire specified surface 2222 of the negative electrode plate is processed through the combusting treatment.

As an example, during the combusting treatment, the negative electrode plate 222 passes the flames along the foregoing second direction, and the flames can cover at least the entire range of the specified surface 2222 of the negative electrode plate in the foregoing first direction (that is, can cover from one side edge to the opposite side edge in the first direction), such that after the entire negative electrode plate 222 passes the flames along the foregoing second direction, the entire specified surface 2222 of the negative electrode plate is subjected to the combusting treatment.

In these embodiments, the specified part includes a surface of the negative electrode plate 222 distributed in the thickness direction, such that the combusting treatment can achieve surface modification on the entire surface of the negative electrode plate.

In some embodiments, the fuel gas includes one or more of methane, propane, butane, pentane, pentene or acetylene.

As an example, the fuel gas may be one of methane, propane acetylene, butane, pentane, and pentene.

As another example, the fuel gas includes a variety of combustible gases, one or more of which are selected from methane, propane, butane, pentane, pentene or acetylene, or may also include other types of combustible gases, for example, the fuel gas is liquefied gas, coal gas or natural gas.

In these embodiments, the fuel gas includes a gas source of a particular type, such that it is convenient to control the flames to reach a suitable temperature, facilitating the better ablation of the burrs of the negative electrode current collector and the negative electrode active material layer at the edges. In addition, the flames generated by the combustion of the fuel gas have a large amount of strong oxidizing gases, which is subjected to an oxidization reaction with the surface of the negative electrode plate 222 at a high temperature to introduce charged polar functional groups, facilitating the increase of the surface energy of the negative electrode plate 222.

In a second aspect, an embodiment of the present application provides a negative electrode plate 222, obtained through the processing method for a negative electrode plate according to the above embodiments.

In a third aspect, an embodiment of the present application provides a battery 100, including the negative electrode plate 222 of the above embodiments.

In a fourth aspect, an embodiment of the present application provides an electrical apparatus, including the battery 100 of the above embodiments.

Specific embodiments are listed below to better describe the present application.

### I. Processing negative electrode plate

### (1) Preparation of a negative electrode plate

The active material of artificial graphite, carbon black as a conductive agent, styrene-butadiene rubber (SBR) binder, and sodium carboxymethyl cellulose (CMC) as a thickener were dissolved in a solvent of deionized water at a weight ratio of 96.2 : 0.8 : 0.8 : 1.2 and uniformly mixed, to prepare a negative electrode slurry. The negative electrode slurry was then uniformly coated on a copper foil of a negative electrode current collector, followed by drying, cold pressing, and slitting to obtain the negative electrode plate.

### (2) Surface treatment of negative electrode plate

The negative electrode plate is placed in a winding apparatus, the fuel gas is lighted, and the negative electrode plate is passed through the flames by the winding apparatus, such that the entire negative electrode plate (that is, including an edge portion and a non-edge portion) is processed by the flames.

Herein, the placement direction of the negative electrode plates, the pass direction of the negative electrode plates, the configuration quantity and position of the gas delivery lighting device, and the like are shown in FIG. 7 and FIG. 8. Process parameter conditions such as the type of fuel gas, the angle between the specified direction and the thickness direction of the negative electrode plate, the specified distance, and the specified speed in the embodiments are shown in Table 1.

**Table 1. Process parameter conditions**

| Item | Fuel gas type | Specified speed (m/min) | Angle between specified direction and thickness direction of negative electrode plate (°) | Specified distance (cm) | Air-fuel ratio |
|---|---|---|---|---|---|
| Embodiment 1 | Liquefied gas | 80 | 0 | 5 | 8 : 1 |
| Embodiment 2 | Liquefied gas | 50 | 0 | 5 | 8 : 1 |
| Embodiment 3 | Liquefied gas | 100 | 0 | 5 | 8 : 1 |
| Embodiment 4 | Liquefied gas | 120 | 0 | 5 | 8 : 1 |
| Embodiment 5 | Liquefied gas | 150 | 0 | 5 | 8 : 1 |
| Embodiment 6 | Liquefied gas | 30 | 0 | 5 | 8 : 1 |
| Embodiment 7 | Liquefied gas | 160 | 0 | 5 | 8 : 1 |
| Embodiment 8 | Liquefied gas | 80 | 30 | 5 | 8 : 1 |
| Embodiment 9 | Liquefied gas | 80 | 60 | 5 | 8 : 1 |
| Embodiment 10 | Liquefied gas | 80 | 0 | 2 | 8 : 1 |
| Embodiment 11 | Liquefied gas | 80 | 0 | 10 | 8 : 1 |
| Embodiment 12 | Liquefied gas | 80 | 0 | 15 | 8 : 1 |
| Embodiment 13 | Liquefied gas | 80 | 0 | 20 | 8 : 1 |
| Embodiment 14 | Liquefied gas | 80 | 0 | 5 | 5 : 1 |
| Embodiment 15 | Liquefied gas | 80 | 0 | 5 | 10 : 1 |
| Embodiment 16 | Liquefied gas | 80 | 0 | 5 | 12 : 1 |
| Embodiment 17 | Liquefied gas | 80 | 0 | 5 | 14 : 1 |
| Embodiment 18 | Liquefied gas | 80 | 0 | 5 | 15 : 1 |
| Embodiment 19 | Natural gas | 80 | 0 | 5 | 8 : 1 |
| Embodiment 20 | Methane | 80 | 0 | 5 | 8 : 1 |
| Embodiment 21 | Acetylene | 80 | 0 | 5 | 8 : 1 |

In addition, the present application further provides comparative example 1 and comparative example 2, where in comparative example 1, the negative electrode plate is not subjected to combusting treatment, and a difference between comparative example 2 and the Embodiment 1 lies in that infrared heating is used instead of combustion with fuel gas flames.

### II. Test method

(1) The edge of the negative electrode plate is photographed for observation.
(2) The burr defect rate of the edge of the negative electrode plate is detected.

A die-cut strip 100 mm of the negative electrode plate is taken, and is gripped by a jig, with an end face of the die-cut strip facing upward.

The edge end face is observed using a CCD camera. Herein, type B burr: A perpendicular distance from a highest point of the local protrusion portion of one of the foregoing specified surfaces to the other foregoing specified surface of the foil is measured along a thickness direction of the negative electrode plate (that is, the size includes a protrusion height along the thickness direction of the negative electrode plate and a thickness of the foil).

Type B burr warning mechanism: if the size of the type B burr ≤ the thickness of the electrode plate * 45%, the size of the type B burr is within the specification and can be normally produced; if the size of the type B burr > the electrode plate thickness * 45%, NG. In the present application, the detection result of the burr defect rate is represented as a percentage of NG.

(3) A surface energy of the foregoing specified surface of the negative electrode plate is measured.

In a direction perpendicular to the foregoing specified surface of the negative electrode plate provided in respective Embodiment 1 and comparative example 1, the foregoing specified surface of the negative electrode plate is marked with a dyne pen with a pressure of 10 N, and the marks of the dyne pen on the foregoing specified surface of the negative electrode plate are observed.

### III. Test results and result analysis

(1) The detection results of the edge of the negative electrode plates by photographing and observation are exemplified by using some examples and comparative examples, as shown in FIG. 9.

It may be seen from FIG. 9 that, compared with comparative example 1, the negative electrode plate provided in examples of the present application has edge burr problems all ameliorated to a different extent.

In addition, according to observation, the negative electrode plate provided in Embodiment 6 is passed through a flame at a speed of 30 m/min. In some cases, a phenomenon of burning out of the negative electrode tab occurs.

(2) The test result for the burr defect rate of the edge of the negative electrode plate is shown in Table 2.

**Table 2. Burr defect rate**

| Item | Burr defect rate |
|---|---|
| Embodiment 1 | 0.05% |
| Embodiment 2 | 0.04% |
| Embodiment 3 | 0.08% |
| Embodiment 4 | 0.12% |
| Embodiment 5 | 0.20% |
| Embodiment 6 | 0.04% |
| Embodiment 7 | 0.50% |
| Embodiment 8 | 0.11% |
| Embodiment 9 | 0.32% |
| Embodiment 10 | 0.52% |
| Embodiment 11 | 0.06% |
| Embodiment 12 | 0.06% |
| Embodiment 13 | 0.51% |
| Embodiment 14 | 0.13% |
| Embodiment 15 | 0.14% |
| Embodiment 16 | 0.14% |
| Embodiment 17 | 0.15% |
| Embodiment 18 | 0.15% |
| Embodiment 19 | 0.05% |
| Embodiment 20 | 0.05% |
| Embodiment 21 | 0.05% |
| Comparative example 1 | 0.80% |
| Comparative example 2 | 0.80% |

With reference to Table 1 and Table 2, brief analysis is as follows:
In Embodiment 1 to Embodiment 21, the combusting treatment is performed on the negative electrode plates; and in comparative example 1, no combusting treatment is performed on the negative electrode plate; in comparative example 2, infrared heating is used for the treatment. Compared with comparative example 1 to comparative example 2, in Embodiment 1 to Embodiment 21, the burr defect rate is reduced to varying extents. Herein, in Embodiment 2, infrared heating is used, since the ablated burrs are not blown away, the burrs still remain in situ. Compared with comparative example 1, the burr defect rate cannot be effectively improved after heating.
In Embodiment 1 to Embodiment 7, the specified speed is different. Herein, when the specified speed is 50 m/min to 150 m/min, compared with comparative example 1, the burr defect rate is significantly reduced. Further, when the specified speed is 50 m/min to 80 m/min, compared with comparative example 1, the burr defect rate is more significantly reduced.
In Embodiment 1, Embodiment 8 to Embodiment 9, the angle between the specified direction and the thickness direction of the negative electrode plate is different. Herein, when the angle between the specified direction and the thickness direction of the negative electrode plate is 0° to 60°, compared with the comparative example 1, the burr defect rate is significantly reduced. When the angle between the specified direction and the thickness direction of the negative electrode plate is 0° to 30°, compared with comparative example 1, the burr defect rate is more significantly reduced.
In Embodiment 1 and Embodiment 10 to Embodiment 13, the specified distance is different. Herein, when the specified distance is 3 cm to 15 cm, compared with comparative example 1, the burr defect rate is significantly reduced. When the specified distance is 5 cm to 15 cm, compared with comparative example 1, the burr defect rate is more significantly reduced.
In Embodiment 1 and Embodiment 14 to Embodiment 18, the air-fuel ratio is different. Herein, when the air-fuel ratio is (5 to 14) : 1, compared with comparative example 1, the burrs defect rate is significantly reduced. When the specified distance is (5 to 8) : 1 compared with comparative example 1, the burr defect rate is more significantly reduced.
In Embodiment 1, Embodiment 19 to Embodiment 21, the type of the fuel gas is different. Herein, compared with Embodiment 1, the burr defect rate of each embodiment is significantly reduced.

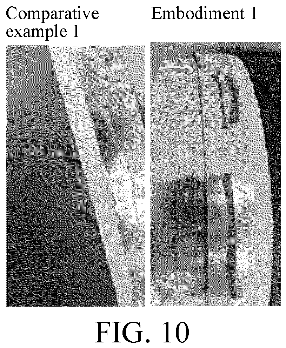

(3) A detection result of testing the surface energy of the specified surface of the negative electrode plate is shown in FIG. 10.

As can be seen from Figure 10, the dyne pen can leave a mark on the specified surface of the negative electrode plate provided in the embodiment, while basically no mark is left on the specified surface of the negative electrode plate provided in comparative example 1, indicating that the specified surface of the negative electrode plate provided in the embodiment of the present application has a higher surface energy.

In conclusion, the foregoing embodiments are for description of the technical solutions of the present application only rather than for limiting the present application. Although the present application has been described in detail with reference to the foregoing embodiments, those of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. Especially, as long as there is no structural conflict, the various technical features mentioned in each embodiment can be combined in any way. The present application is not limited to the particular embodiments disclosed herein, but comprises all technical solutions that fall within the scope of the claims.

## Claims

1. A processing method for a negative electrode plate, comprising: performing combusting treatment on a specified part of the negative electrode plate, wherein the specified part at least comprises an edge of the negative electrode plate, and the combusting treatment comprises combusting a fuel gas and processing the specified part using generated flames.

2. The processing method for a negative electrode plate according to claim 1, wherein in the combusting treatment, the fuel gas is injected toward the negative electrode plate in a specified direction for combustion, and an angle between the specified direction and a thickness direction of the negative electrode plate is 0° to 60°.

3. The processing method for a negative electrode plate according to claim 2, wherein the angle between the specified direction and the thickness direction of the negative electrode plate is 0° to 30°.

4. The processing method for a negative electrode plate according to any one of claims 1 to 3, wherein in the combusting treatment, the fuel gas is injected toward the negative electrode plate at a specified distance from the negative electrode plate for combustion, wherein the specified distance is 3 cm to 15 cm.

5. The processing method for a negative electrode plate according to claim 4, wherein the specified distance is 5 cm to 15 cm.

6. The processing method for a negative electrode plate according to any one of claims 1 to 5, wherein in the combusting treatment, the negative electrode plate is passed through the flames at a specified speed, and the specified speed is 50 m/min to 150 m/min.

7. The processing method for a negative electrode plate according to claim 6, wherein the specified speed is 50 m/min to 80 m/min.

8. The processing method for a negative electrode plate according to any one of claims 1 to 7, wherein in the combusting treatment, an air-fuel ratio is (5 to 14) : 1.

9. The processing method for a negative electrode plate according to claim 8, wherein the air-fuel ratio is (5 to 8) : 1.

10. The processing method for a negative electrode plate according to any one of claims 1 to 9, wherein the flame has a temperature of 900°C to 1300°C.

11. The processing method for a negative electrode plate according to any one of claims 1 to 10, wherein the specified part comprises a specified surface of the negative electrode plate, and the specified surface of the negative electrode plate is a surface of the negative electrode plate distributed in the thickness direction.

12. The processing method for a negative electrode plate according to any one of claims 1 to 11, wherein the fuel gas includes one or more of methane, propane, butane, pentane, pentene or acetylene.

13. A negative electrode plate, wherein the negative electrode plate is obtained through the processing method for a negative electrode plate according to any one of claims 1 to 12.

14. A battery, comprising the negative electrode plate according to claim 13.

15. An electrical apparatus, comprising the battery according to claim 14.
